# EUROPEAN PATENT APPLICATION

(11) **EP 3 879 925 A1**
(43) Date of publication of application: **15.09.2021**
(21) Application number: 20162649.6
(22) Date of filing: 12.03.2020
(51) Int. Cl.: H05B 1/02, H05B 6/06

(54) **HOUSEHOLD APPLIANCE WITH ACCELERATION DETECTION AND/OR MEASURING MEANS AND CONTROL UNIT AND METHOD FOR CONTROLLING A HOUSEHOLD APPLIANCE**

(71) Applicant: ELECTROLUX APPLIANCES AKTIEBOLAG, 105 45 Stockholm (SE)
(72) Inventor: CHRISTIANSEN, Svend Erik, 47100 Forli (IT); VIROLI, Alex, 47122 Forli (IT); ROSSI, Andrea, 47122 Forli (IT); JEANNETEAU, Laurent, 60200 Compiègne (FR); NOSTRO, Massimo, 47122 Forli (IT); ZANGOLI, Massimo, 47122 Forli (IT)
(74) Representative: Electrolux Group Patents

(57) **Abstract**

The present invention relates to a household appliance (1), in particular to a cooking hob, which comprises or is connected to an acceleration detection and/or measuring means (11) and a control unit (23) for controlling operating processes. The acceleration detection and/or measuring means (11), which may be an acceleration sensor and particularly a gravity sensor, is adapted for a detection of an acceleration of a section or a reference point of a wall or a panel (3) of the household appliance (1). The household appliance (1) may comprise a user interface (9) for providing information to a user, particularly status information, and/or for receiving input, particularly of control commands or data input, from the user. The acceleration detection and/or measuring means (11) is connected to the control unit (23) and/or, if applicable, to the user interface (9) for an exchange of data, and forms a trigger element for the control unit (23) and/or, if applicable, for the user interface (9). Further, the acceleration detection and/or measuring means (11) is adapted to provide a trigger signal for a control of a function and/or an operating process in the household appliance (1).

Further, the present invention also relates to a method for controlling a household appliance (1), in particular a cooking hob. According to the invention, a function and/or an operating process in or of the household appliance (1) is triggered by an acceleration detection and/or measuring means (11), particularly by an acceleration sensor, more particularly by a gravity sensor, as a result of a detection of an acceleration of a section or a reference point of a wall or a panel (3) of the household appliance (1).

## Description

The present invention relates to a household appliance, in particular a cooking hob, comprising an acceleration detection and/or measuring means and a control unit for controlling operating processes. The present invention further relates to a method for controlling a household appliance, in particular for controlling a cooking hob.

From EP 2 999 301 A1 an induction cooking hob with a boiling detection and an induction energy control is known. Vibrations caused by bubbles forming inside of a heated substance can be detected based on information of a micro-electromechanical system processing signals from an acceleration sensor in combination with a temperature sensor associated to a heating zone. The cooking process is controlled from the start by a control unit of the induction cooking hob and a user has to start the automated process with the boiling detection function by pressing a dedicated button.

It is an object of the present invention to provide a household appliance, which comprises or is connected to an acceleration detection and/or measuring means and a control unit for controlling operating processes, as well as a method for controlling a household appliance, with further improved functionality making enhanced use of an acceleration detection and/or measuring device or unit applied in a household appliance.

The object is achieved for a household appliance comprising or being connected to an acceleration detection and/or measuring means and a control unit for controlling operating processes according to the features of claim 1.

According to a first aspect of the invention, a household appliance, in particular a cooking hob, comprises or is connected to an acceleration detection and/or measuring means for a detection of an acceleration of a section or a reference point of a wall or a panel of the household appliance and a control unit for controlling operating processes. The household appliance may further comprise or may further be connected to a user interface for providing information, particularly status information, to a user of the household appliance and/or for receiving input, particularly of control commands or data input, from the user. The acceleration detection and/or measuring means, which may be an acceleration sensor, particularly a gravity sensor, is connected to the control unit and/or, if applicable, to the user interface for an exchange of data and forms a trigger element for the control unit and/or, if applicable, for the user interface. That way, it is adapted to provide a trigger signal for a control of a function and/or an operating process in the household appliance.

The acceleration detection and/or measuring means may be adapted to recognize a gesture control input, which may be a manual or mechanical action exerted on the household appliance. Said manual or mechanical action is particularly a knocking, a hammering or typing on a surface, specifically on an outer surface of the panel or the wall, of the household appliance. As an example, said gesture control input may be a double tap on the top panel of a cooking hob. With such gesture control input a further or an additional way to input a command is given to the user besides the conventional way of inputs via a user interface of the household appliance. A gesture may be also a combination of gestures.

In a specific embodiment, the acceleration detection and/or measuring means is adapted to recognize a placing of an item on a panel of the household appliance, in particular a placing of a cookware on a top plate of a cooking hob. During the placing of the item, usually a shock or vibration, even thought it might be only a soft shock, is caused to the storage or to the work surface, which shock or vibration may be detectable and/or measurable. In order to detect also a soft placing, the detection and/or measuring means may comprise specifically sensitive sensing elements and particularly an extremely low noise evaluation circuit.

Additionally or alternatively, the acceleration detection and/or measuring means may be adapted to recognize and/or to evaluate vibrations originating from specific operating conditions, in particular from a boiling of a fluid. When heating up fluid, for example liquid food, in a container or cooking vessel, cavitation occurs starting when passing over a certain temperature that depends on the atmospheric pressure. Cavitation is a phenomenon in which rapid changes of pressure in a liquid lead to the formation of small vapour-filled cavities, in places where the pressure is relatively low. When subjected to higher pressure, these cavities, called "bubbles" or "voids", collapse and can generate a shock wave. Said shock wave are transferred to the container or cooking pot and further on to the positioning area of the container or cooking pot. That way, the shock waves can be sensed by the detection and/or measuring means. Moreover, not only the pure incidence of such shock waves or bubbles may be identifiable, rather, even the intensity may be measured, so that conclusions can be drawn to the actual cooking or boiling level.

In a preferred embodiment, the acceleration detection and/or measuring means is an add-on module, which is connected or connectable to the household appliance and allocated to the wall or panel of the household appliance. Preferably, the add-on module is placed or placeable on the panel. Said add-on module may be a stand-alone and/or connectable device providing an after sales accessory. The module may comprise keys, particularly touch sensitive switches, to activate the function and/or operating process. Advantageously, the add-on module is adapted to perform or activate a boil detection function.

According to embodiments, the acceleration detection and/or measuring means comprises at least one control element for user inputs. Said acceleration detection and/or measuring means may be an integrated module, which may be positioned inside of the household appliance, for example behind the wall or under a top panel. In contrast, the acceleration detection and/or measuring means may be comprised in or may be said add-on module. Said at least one control element is preferably a touch control element. The touch control element may be adapted to activate the function and/or the operating process, in particular a boil detection function.

A specifically preferred embodiment is characterized by an acceleration detection and/or measuring means, which comprises communication means, preferably for wireless communication. Said wireless communication means may be configured to process wireless infrared or radio connection communication. The acceleration detection and/or measuring means may be adapted to communicate with the control unit and/or with the user interface, if available in the household appliance. A communication with an external device or module or with a sensor unit may be covered as well. Wireless communication may be activatable by said keys, particularly said touch sensitive switches, when covered by the detection and/or measuring means.

According to embodiments, said external device or module or sensor unit is an external computing device, particularly a smartphone, a tablet computer, a portable or non-portable personal computer or a gateway. It may also be a sensor means or module arranged or arrangeable on the panel, in particular the top panel, or distant therefrom and controlling or monitoring the panel, in particular a surface thereof, and/or an item, particularly a cooking pot or vessel, placed thereon. Said controlling or monitoring is preferably a controlling or monitoring of a temperature.

The object is achieved for a method for controlling a house appliance according to the characterizing part of claim 11.

According to a further aspect of the invention, a method for controlling a household appliance, in particular a cooking hob, is disclosed. A function and/or an operating process in or of the household appliance is triggered by an acceleration detection and/or measuring means as a result of a detection of an acceleration of a section or of a reference point of a wall or a panel of the household appliance. The acceleration detection and/or measuring means is particularly an acceleration sensor, more particularly a gravity sensor. The acceleration detection and/or measuring means favourably triggers a control unit, which is adapted to control operating processes and/or start and control specific functions. Said acceleration detection and/or measuring means may exchange data with, particularly provide data for, a user interface, if available, so that it may be structured in the household appliance to provide a trigger signal for a control of a function and/or an operating process by the user interface or by the control unit via the user interface.

A specific embodiment is characterized by a user's gesture control input, which is recognized following the detected acceleration as a result of a manual or mechanical action exerted on the household appliance. Said manual or mechanical action may be a knocking, a hammering or typing on a surface of the household appliance. In this context, a specific communication between user and household appliance may be considered, making use of a defined code for the user to perform such manual or mechanical actions and causing specific effects in or of the household appliance. Examples may be a hammering or knocking using Morse code or any other predefined or definable codes or actuation sequences or patterns.

According to embodiments, said gesture control input, for example a pattern of at least one manual or mechanical action exerted on the household appliance, triggers at least one function and/or operating process. Just as examples, this may be an activation of a timer and/or a stop of an acoustic or optical signal provider, in particular a buzzer, and/or an activation of a user interface, in particular a display unit of the user interface. An explicit action pattern preferably triggers a dedicated function and/or operating process. With this kind of communication means, there may be a possibility to limit the number of or there may be even no need for other, particularly mechanically operated, input means like buttons, keys, rotary knobs, or the like. Further, said gesture control inputs may provide a possibility to the user to use any arbitrary position on the housing of the household appliance to perform said manual or mechanical action, and there may be no need for focussing on an explicit user interface when providing such input.

The detected acceleration may also be a result of a placing of an item on the wall or on the panel of the household appliance. In the case of a cooking hob, this may be a placing of cookware on a top plate thereof. In that case, this kind of acceleration particularly triggers at least one function and/or operating process, which may be an indication of a detected item, in particular detected cookware on a cooking hob, and/or an activation of an item detection function, particularly a pot detection function, and/or an estimation or a determination of a weight of the item, particularly in cooperation with weight estimation means, and/or an activation of a function of a user interface of the household appliance and/or an activation of a control function for controlling the household appliance. Any kind of information or indications may be provided to the user on a display of a user interface of the household appliance.

It is favourable to provide a clear distinction for a signal stemming from said pot placing from a signal stemming from a user's gesture control input, so that misinterpretation and a potential triggering of a wrong function and/or operating process will be avoided. Such differentiation may be obtained, for example, by excluding actuation sequences or patterns for gesture control inputs that are too close to and confusable with a touch-down of an item on the panel. The other way round, it may be favourable to exclude the execution of gesture control inputs at locations which are too close to touch-down positions of said items to be detected for avoiding said misinterpretation, for example to bar gesture control inputs on or close to cooking zones.

According to a further preferred embodiment, the function and/or the operating process is triggered by the acceleration detection and/or measuring means dependent on additional information received by the acceleration detection and/or measuring means from external sensor means. Said additional information is particularly provided by a temperature sensor, preferably a temperature probe or an infrared temperature sensor, which monitors temperature conditions, such as the temperature of the item to be treated.

Novel and inventive features of the present invention are set forth in the appended claims.

The present invention will be described in further detail with reference to the drawings, in which
- Fig. 1: is a schematic top view of an induction cooking hob with four cooking zone, a user interface and an acceleration sensor;
- Fig. 2: is a schematic cross-sectional view of the induction cooking hob of Fig. 1 along the line II - II;
- Fig. 3: is a schematic detail view of detail III indicated in Fig. 2, with additional components and wiring;
- Fig. 4: is a schematic top view of the induction cooking hob of Fig. 1 with an indication of a gesture control action;
- Fig. 5: illustrates the induction cooking hob of Fig. 2 with cooking vessel placed thereon;
- Fig. 6: illustrates the induction cooking hob according to Fig. 5 with the cooking vessel during the movement of its placement; and
- Fig. 7: illustrates the induction cooking hob according to Fig. 1 with additional temperature sensor.

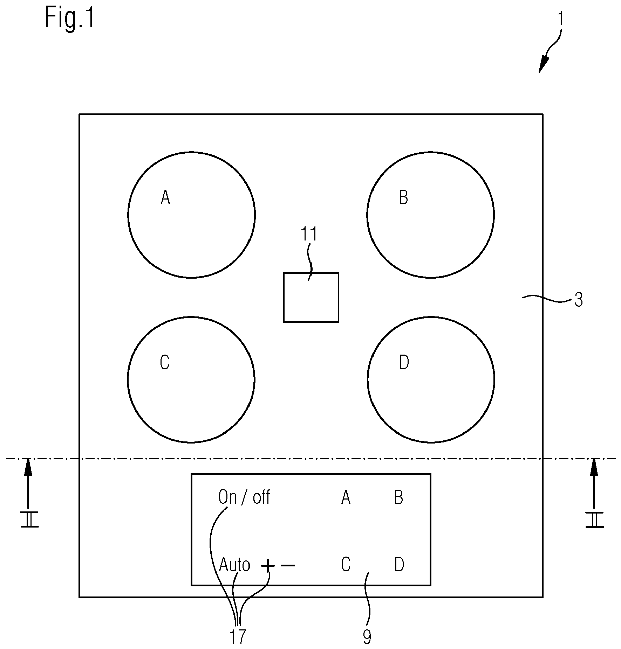

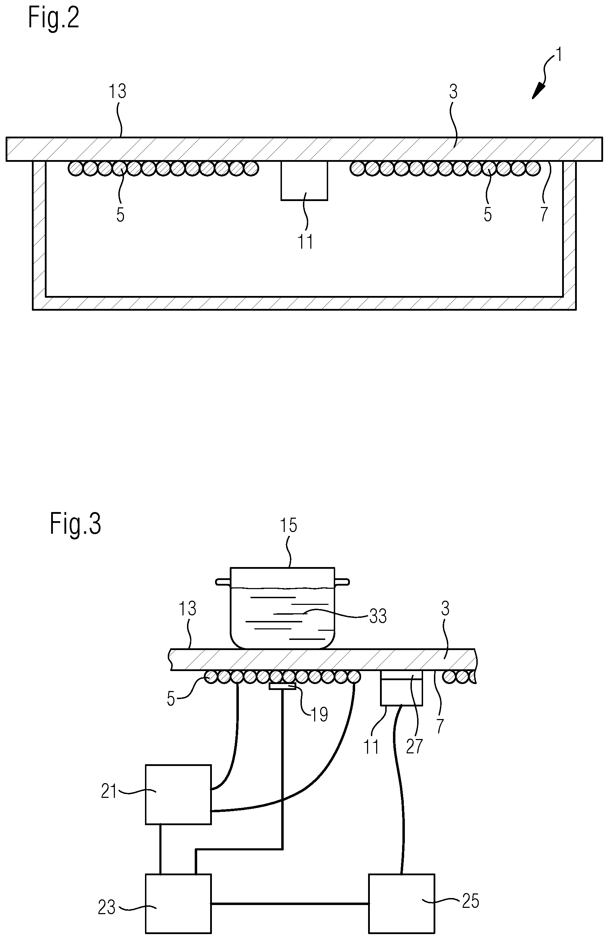

With Figs. 1 and 2, both in a top view and in a cross-sectional view along the line II - II indicated in Fig. 1, an induction cooking hob 1 is schematically illustrated, indicating by circles four cooking zones A, B, C, D rectangularly arranged on a glass ceramic top panel 3. Each cooking zone A, B, C, D is heated by induction coils 5 arranged close to a bottom surface 7 of the top panel 3. The induction cooking hob 1 is further equipped with a user interface 9 positioned at the front edge of the induction cooking hob 1. The induction cooking hob 1 further comprises an accelerometer 11, i. e. an acceleration sensor. Said accelerometer 11 is configured to determine and/or measure an acceleration, for example a vibration, of the centre of the top panel 3 in vertical direction during or due to the impact of a manual or mechanical action onto the top side 13 of the top panel 3.

The user interface 9 comprises a touch sensitive display adapted to receive user inputs for the operation of the cooking zones A, B, C, D and to display information, for example status information of the cooking zones A, B, C, D. The user can operate the cooking zones A, B, C, D through touch switches A', B', C', D', each one thereof assigned to one of the cooking zones A, B, C, D. Further touch switches 17 for other hob functions are covered as well.

Fig. 3 illustrates a detail view of one of the cooking zones A, B, C, D together with a schematic presentation of the wiring required for its operation. This illustration can also be seen as a basic configuration generally for an induction cooking hob 1 using the example of only one cooking zone A, B, C, D. Fig. 3 shows the section with the one cooking zone A, B, C, D, with the top panel 3 supporting a cooking pot 15 above the cooking zone A, B, C, D. The cooking zone A, B, C, D is exposed to electromagnetic waves emanated from the induction coil 5 located underneath the cooking zone A, B, C, D, the waves inducing eddy currents in the bottom of the cooking pot 15 with the effect of heating up the pot bottom. Located in the area of the cooking zone A, B, C, D is a thermal sensor 19, such as a thermostat providing information about a temperature in this area. Further, a induction generator 21 of magnetic waves is shown, which is connected to a controller 23, which controls the signals and the energy of the signals generated by the generator 21. A user interface controller 25 is also shown, which is connected to the controller 23 and to the accelerometer 11, which is a micro-electromechanical system (MEMS) in the present example. As illustrated, the micro-electromechanical system 11 is attached to the induction cooking hob 1 indirectly via a dielectric shield 27, which may be made of a mica mineral substance being a hard substance, which does not substantially dampen vibrations and which protects the micro-electromechanical system 11 from electromagnetic waves emanated from the induction coil 5 or an electric field that builds up or is present during operation or at the induction cooking hob 1. At the same time, mica also provides good thermal isolation against heat transmitted from e. g. a hot cooking pot 15 through the glass ceramics top panel 3.

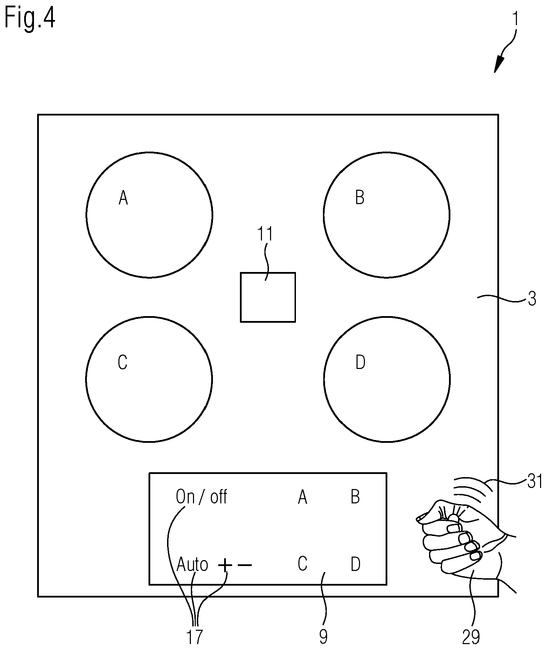

According to Fig. 4, a user indicated by a user's hand 29 is providing a gesture control input to the induction cooking hob 1. Said gesture control input is constituted by a manual or mechanical action upon the top panel 3 of the induction cooking hob 1, which may be a hammering, a knocking, or the like, indicated by movement 31. Said manual or mechanical action causes the top panel 3 to vibrate, even though there is an oscillation with only a small amplitude due to the character of the top panel 3. Nevertheless, the micro-electromechanical system 11 is sufficiently sensitive to detect and, if necessary, to measure the accelerated movements during said oscillations.

The afore-described mechanical action, i. e. the gesture control input, is understood by the induction cooking hob 1, or by its controller 23, respectively, as an input of a control command. A set of several gesture control commands may be defined by way of a set of patterns of manual or mechanical actions, which may be different sequences of knockings, hammerings, or the like. Similar to the well-known Morse code, different gesture control inputs may be predefined in a memory and/or a concordance list of the control circuitry of the induction cooking hob 1 and the user is enabled to trigger a function or an operating process by performing an associated gesture input. Such function or operating process may be one of: activating or stopping a timer function, stopping a buzzer or a flashing signal, activating a user interface 9 that is set in a stand-by mode or lighten up or switching on illumination means on the user interface that are dimmed out for energy saving, etc.

The above-mentioned way of usage of the accelerometer 11 in the induction cooking hob 1 is only a first application thereof. Other use cases are available and in the following two further ones are described by example.

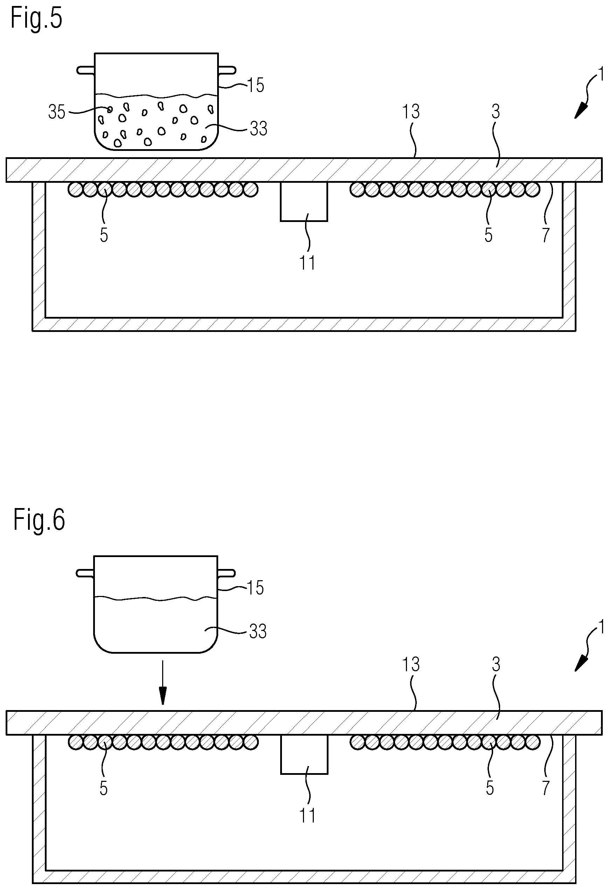

With reference to Fig. 3, indicating the general hob configuration and the principle of heating up a substance 33 inside the cooking pot 15, the heating process and its effects will be further explained. At a certain point in time, when approaching the boiling point of the fluid, bubbles 35 start to form inside of the substance 33 and collapse again, which leads to vibrations and audible sound, see Fig. 5. These vibrations and the sound are detected by the micro-electromechanical system 11, so that such boiling or close-to-boiling status information is provided to the controller 23 of the induction cooking hob 1. With such kind of information, energy supply to the induction coil 5 of the cooking zone A, B, C, D may be regulated and controlled in a way that avoids boil-over of the substance 33 inside the cooking pot 15.

Fig. 6 illustrates another use case for an accelerometer 11 application in an induction cooking hob 1. Similar to the manual or mechanical action by way of a gesture control input according to Fig 4, a touch-down movement of a cooking pot 15 on the top panel 3, indicated by arrow 37, in particular on a cooking zone A, B, C, D arranged on the top panel 3, even a comparably smooth touch-down, causes a vibration of the top panel 3 due to this kind of mechanical action of pot placement. Said vibration caused by pot placement is detected and identified by the controller 23 of the induction cooking hob 1 and a predefined action, i.e. an associated function and/or operating process is automatically started, which may be an activation of a pot detection function and/or indication of the detected pot 3, e.g. a respective display on the user interface 9, optionally with an activation for inputs of the touch key A', B', C', D' allocated to the occupied cooking zone A, B, C, D. Additionally or alternatively, a function of weight estimation for the respective cooking pot 15 and its content may be started. Moreover, any kind of function of the user interface 9 of the induction cooking hob 1 may be initiated or activated, including a specific hob control functionality.

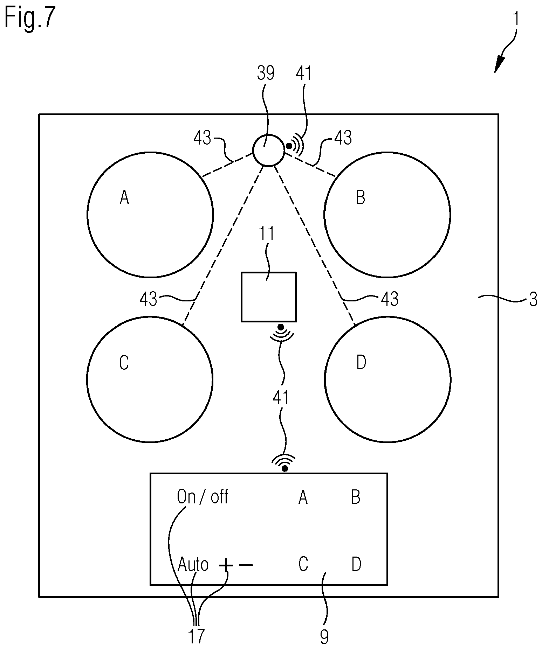

With reference to Fig. 7, a further enhanced control mechanism is now described. According to this specific example, the accelerometer 11 and/or the controller 23 and/or the user interface 9 of the induction cooking hob 1, which units 9, 11, 23 are equipped with wireless communication means (indicated by symbol 41), communicate with a further sensor device, which is arranged on the top side 13 of the top panel 3 and also comprises wireless communication means. Said further sensor device is an infrared temperature sensor device 39 monitoring the upper side of the top panel 3, more specifically cooking pots 15 placed on any of the cooking zones A, B, C, D. Said monitoring relates to a temperature sensing of the outer surface of the cooking pot(s). To this end, the infrared temperature sensor device 39 is adapted to measure infrared radiations (indicated by dotted lines 43) emitted from heated cooking pots 15. That way, in addition or alternatively to the thermal sensors 19 in each one of the areas of the cooking zones A, B, C, D underneath the top panel 3 (see. Fig. 3) temperature information can be gathered from the cooking zones A, B, C, D and the cookware 15 placed thereon. With this information a more individualized control of the cooking zones A, B, C, D with only one accelerometer 11 in the centre are of the induction cooking hob 1 is enabled, because a signal of a boiling cooking pot can be easily allocated to the related cooking zone A, B, C, D with the additional information of the temperatures of the cooking pots 15.

In thinking one step further, with the afore-mentioned option to provide components of the cooking hob 1 with wireless communication means, also wireless communication with and external control from external smart devices like smartphones or tablet computers, or the like, may be made possible. This may be set up by a communication with said external device only via the controller 23 or via the user interface 9, but also a direct communication of the smart device with the accelerometer 11 or with the infrared temperature sensor device 39 may be considered, for example the smart device receiving directly information about the temperature of the cooking pot 15.

The accelerometer 11 and/or the infrared temperature sensor device 39 may be supplied with energy by a cable connection to the user interface 9 or to a power board included for the power supply of the induction coils 5. Alternatively, energy harvesting means may be provided, which are connected to or even implemented in the accelerometer 11 and/or to the infrared temperature sensor device 39 and which are tapping energy provided by the inductive field built up by the induction coils for the cooking process.

Although an illustrative embodiment of the present invention has been described herein with reference to the accompanying drawing, it is to be understood that the present invention is not limited to that precise embodiment, and that various other changes and modifications may be affected therein by one skilled in the art without departing from the scope or spirit of the invention. All such changes and modifications are intended to be included within the scope of the invention as defined by the appended claims.

### List of reference numerals

- 1: induction cooking hob
- 3: top panel
- 5: induction coil
- 7: bottom surface
- 9: user interface
- 11: accelerometer
- 13: top side / top surface
- 15: cooking pot
- 17: touch switches
- 19: thermal sensor
- 21: induction generator
- 23: controller
- 25: user interface controller
- 27: dielectric shield
- 29: user's hand
- 31: movement of mechanical action
- 33: substance
- 35: bubbles
- 37: arrow for touch-down movement
- 39: infrared temperature sensor
- 41: wireless communication symbol
- 43: dotted line symbolizing infrared radiation
- A, B, C, D: cooking zones
- A', B', C', D': touch switches

## Claims

1. A household appliance, in particular a cooking hob, comprising or being connected to
- an acceleration detection and/or measuring means (11), particularly an acceleration sensor, more particularly a gravity sensor, for a detection of an acceleration of a section or a reference point of a wall or a panel (3) of the household appliance (1),
- a control unit (23) for controlling operating processes and
- preferably a user interface (9) for providing information, particularly status information, of the household appliance (1) to a user and/or for receiving input, particularly of control commands or data input, from the user,
the acceleration detection and/or measuring means (11)
- being connected to the control unit (23) and/or, if applicable, to the user interface (9) for exchange of data, and
- forming a trigger element for the control unit (23) and/or, if applicable, for the user interface (9) and being adapted to provide a trigger signal for a control of a function and/or an operating process in the household appliance (1).

2. The household appliance according to claim 1, **characterized in that**
the acceleration detection and/or measuring means is adapted to recognize a gesture control input, in particular a manual or mechanical action exerted on the household appliance (1), more in particular a knocking, a hammering or typing on a surface (13), in particular on an outer surface of the panel (3) or the wall, of the household appliance (1).

3. The household appliance according to claim 1 or 2, **characterized in that**
the acceleration detection and/or measuring means (11) is adapted to recognize a placing of an item (15) on a panel (3) of the household appliance (1), in particular a placing of a cookware on a top plate of a cooking hob.

4. The household appliance according to anyone of the preceding claims,
**characterized in that**
the acceleration detection and/or measuring means (11) is adapted to recognize and/or to evaluate vibrations originating from specific operating conditions, in particular from a boiling of a fluid (33).

5. The household appliance according to anyone of the preceding claims,
**characterized in that**
the acceleration detection and/or measuring means (11) is an add-on module connected or connectable to the household appliance (1) and allocated to, preferably placed or placeable on, the panel of the household appliance (1).

6. The household appliance according to claim 5, **characterized in that**
the add-on module is adapted to perform or activate a boil detection function.

7. The household appliance according to anyone of the preceding claims,
**characterized in that**
the acceleration detection and/or measuring means (11), in particular the add-on module, comprises control elements, particularly touch control elements, for user inputs.

8. The household appliance according to claim 7, **characterized in that**
the touch control elements are adapted to activate the function and/or the operating process, in particular a boil detection function.

9. The household appliance according to anyone of the preceding claims,
**characterized in that**
the acceleration detection and/or measuring means (11) comprises communication means, preferably for wireless communication, in particular for wireless infrared or radio connection communication, for a communication with the control unit (23) and/or, if applicable, with the user interface (9) of the household appliance (1) and/or with an external device or module or sensor unit.

10. The household appliance according to claim 9, **characterized in that**
the external device or module or sensor unit is an external computing device, particularly a smartphone, a tablet computer, a portable or non-portable personal computer or a gateway, or a sensor means (39) or module arranged or arrangeable on the panel (3) or distant therefrom and controlling or monitoring the panel (3), in particular a surface thereof, and/or an item (15) placed thereon, preferably a controlling or monitoring of a temperature.

11. A method for controlling a household appliance, in particular a cooking hob,
**characterized in that**
a function and/or an operating process in or of the household appliance (1) is triggered by an acceleration detection and/or measuring means (11), particularly by an acceleration sensor, more particularly by a gravity sensor, as a result of a detection of an acceleration of a section or a reference point of a wall or a panel (3) of the household appliance (1).

12. The method according to claim 11,
**characterized in that**
a user's gesture control input is recognized following the detected acceleration as a result of a manual or mechanical action exerted on the household appliance (1), in particular a knocking, a hammering or typing on a surface (13) of the household appliance (1).

13. The method according to claim 12,
**characterized in that**
the gesture control input, in particular a pattern of at least one manual or mechanical action exerted on the household appliance (1), triggers at least one function and/or operating process, particularly at least one of
- an activation of a timer,
- a stop of an acoustic or optical signal provider, in particular a buzzer,
- an activation of a user interface (9), in particular a display unit of the user interface (9).

14. The method according to anyone of the claims 11 to 13, **characterized in that**
the detected acceleration, which is a result of a placing of an item (15) on the wall or on the panel (3) of the household appliance (1), in particular a placing of cookware on a top panel (3) of a cooking hob, triggers at least one function and/or operating process, particularly at least one of
- an indication of a detected item (15), in particular detected cookware (15) on a cooking hob (1), preferably on a display of a user interface (9) of the household appliance (1),
- an activation of an item detection function, particularly a pot detection function,
- an estimation or a determination of a weight of the item (15), particularly in cooperation with weight estimation means,
- an activation of a function of a user interface (9) of the household appliance (1),
- an activation of a control function for controlling the household appliance (1).

15. The method according to anyone of the claims 11 to 14, **characterized in that**
the function and/or the operating process is triggered by the acceleration detection and/or measuring means (11) dependent on additional information received by the acceleration detection and/or measuring means (11) from external sensor means (39), in particular received from a temperature sensor, preferably a temperature probe or an infrared temperature sensor, monitoring temperature conditions, particularly of the item (15) to be treated.
